Europäisches Patentamt

(19) European Patent Office  (11) Veröffentlichungsnummer: **0 153 295**

Office européen des brevets  **B1**

(12) **EUROPÄISCHE PATENTSCHRIFT**

(45) Veröffentlichungstag der Patentschrifft:  (51) Int. Cl. ⁴: **B 60 C 15/02**
17.01.90

(21) Anmeldenummer: 85890017.8

(22) Anmeldetag: 23.01.85

(54) Luftbereiftes Fahrzeugrad.

(30) Priorität: 22.02.84 AT 567/84  (73) Patentinhaber: **Semperit Reifen Aktiengesellschaft**
**Wienersdorferstrasse 20-24**
**A-2514 Traiskirchen (AT)**

(43) Veröffentlichungstag der Anmeldung:
28.08.85 Patentblatt 85/35  (72) Erfinder: **Stumpf, Horst, Dipl. -Ing.**
**Josefsplatz 1**
**A-2500 Baden (AT)**

(45) Bekanntmachung des Hinweises auf die Patenterteilung:
17.01.90 Patentblatt 90/03

㊷ Bennante Vertragsstaaten:
**AT DE FR GB IT LU**

(56) Entgegenhaltungen:
**DE-A-2 429 153**
**DE-A-2 830 708**
**DE-A-2 851 492**
**DE-A-2 901 719**
**DE-A-2 930 834**
**FR-A-981 806**
**FR-A-2 482 904**
**US-A-3 768 538**
**US-A-4 034 790**

LIBERGRAF, STOCKHOLM 1990

## Beschreibung

Die Erfindung betrifft ein luftbereiftes Fahrzeugrad gemäß dem Obergriff des Anspruchs 1.

Bei einem herkömmlichen gattungsgemäßen luftbereiften Fahrzeugrad ist der Reifen auf einer Felge gehalten, die mittig mit einem Tiefbett versehen ist, an welches beidseitig nach außen zu und am äußeren Umfang der Felge Sitzflächen für die Reifenwülste, die zugfeste Wulstkerne enthalten, anschließen. Durch sich radial nach außen erstreckende Felgenhörner sind die Reifenwülste gegen ein seitliches Abrutschen von den Sitzflächen gesichert. Das Tiefbett ermöglicht die Montage des Reifens auf der Felge durch Einsenken eines Reifenwulstes bei der Reifenmontage. Um im Falle eines Reifendefektes einen Notlauf des Reifens zu ermöglichen, ist es weiters bekannt, zwischen den Felgenhörnern am äußeren Umfang der Felge Stützkörper zum Abstützen des Reifenkörpers vorzusehen. Im allgemeinen wird jedoch eine derartige Maßnahme nicht angewandt, so daß sich die Reifenwülste schon nach kurzer Laufzeit mit defektem Reifen von den Sitzflächen der Felge lösen und irreparable Beschädigungen am Reifen und an der Felge auftreten. Ein weiters gattungsgemäßes Fahrzeugrad zeigt auch die US-A-4 034 790.

Ein gattungsgemäßes Fahrzeugrad bei dem die Reifenwülste auf Sitzflächen am inneren Umfang der Felge gehalten sind, ist beispielsweise in der DE-OS-3 000 428 beschrieben. Die für dieses Fahrzeugrad verwendete Felge besteht aus einem Felgenkranz, der an einer Schüssel angeschweißt ist. Die seitlichen Randbereiche des Felgenkranzes weisen je ein sich radial nach innen erstreckendes Felgenhorn auf, an welches sich je eine Sitzfläche für die Reifenwülste anschließt. Demgemäß liegen die Reifenwülste am inneren Umfang des Felgenkörpers an, wobei sie einen Teil der Felgenhörner berühren. Durch die Felgenhörner sind daher die Reifenwülste gegen ein seitliches Abrutschen von den Sitzflächen gesichert. Anschließend an die Sitzflächen sind an der Felge Vertiefungen ausgebildet, die für die Montage des Reifens auf der Felge vorgesehen sind. Zur Halterung der Reifenwülste auf den Sitzflächen ist weiters vorgesehen, daß in die Vertiefungen entsprechende Sicherungsringe eingesetzt werden, oder daß an den inneren Endbereichen der Sitzflächen an der Felge umlaufende Vorsprünge ausgebildet sind. Ein Notlauf des Reifens ist dadurch sichergestellt, daß sich der defekte Reifen auf zwei im Abstand voneinander angeordneten Felgenabschnitten abstützen kann. Ein ähnliches luftbereiftes Fahrzeugrad ist in der DE-OS-3 019 742 beschrieben. Dieses Fahrzeugrad entspricht im wesentlichen dem in der DE-OS-3 000 428 gezeigten mit dem Unterschied, daß sich der Reifen dieses Fahrzeugrades am Mittelteil der Felge bei Notlauf abstützen kann, wobei auf das üblicherweise in der Felge eingearbeitete Tiefbett verzichtet wird. Zum Sichern der Reifenwülste an der Felge sind bei beiden bekannten Ausführungen, wie schon oben erwähnt wurde, zwei Maßnahmen erforderlich: Einerseits das Vorsehen von sich radial nach innen erstreckenden Felgenhörnern und andererseits eine weitere Sicherung in Form eines Sicherungsringes bzw. eines umlaufenden Vorsprunges an der Felge. Zur Montage des Luftreifens auf der Felge ist es zunächst erforderlich, daß ein Teil seines Umfanges in eine der Vertiefungen eingeführt wird, worauf der gegenüberliegende Teil des Reifenwulstes über das Felgenhorn auf die Sitzfläche gebracht werden kann. Aus den Vertiefungen sind dann die Reifenwülste in die Betriebsstellung auf ihre Sitzflächen zu ziehen. Abschließend ist gegebenenfalls noch der Sicherungsring einzusetzen. Trotz der Maßnahmen zur Sicherung der Reifenwülste an der Felge ist es bei diesen bekannten Konstruktionen bei einer hohen Beanspruchung des Reifens nicht zur Gänze auszuschließen, daß sich die Wülste von der Felge lösen.

Die Erfindung hat sich nun die Aufgabe gestellt, ein luftbereiftes Fahrzeugrad der eingangs genannten Art zu schaffen, bei dem der Reifen auf Felgen, die sowohl Wulstsitzflächen am inneren, als auch Wulstsitzflächen am äußeren Umfang aufweisen können, ohne an der Felge auszubildende oder einzusetzende Sicherungsmittel gehalten werden kann, wobei die Felge selbst einfach aufgebaut und leicht herstellbar sein soll. Des weiteren soll eine möglichst einfache und gegebenenfalls auch automatisierbare Montage des Reifens auf der Felge gewährleistet sein. Zusätzlich sollen auch noch gute Notlaufeigenschaften bei defektem Reifen sichergestellt sein.

Diese Aufgabe wird erfindungsgemäß dadurch gelöst, daß die Wulstkerne nach dem Aufbringen des Reifens auf die Felge in radialer Richtung verquetscht werden, derart daß die Reifenwülste an den Sitzflächen der Felge ausschließlich durch Preßsitz gehalten sind.

Durch diese erfindungsgemäßen Maßnahmen sind an der Felge keine zusätzlichen Wulstsicherungsmittel, wie beispielsweise speziell geformte Felgenhörner, erforderlich. Die Felge ist daher einfach aufgebaut und auch leicht herstellbar. Die erfindungsgemäßen Maßnahmen sind sowohl bei einem Wulstsitz am inneren als auch am äußeren Umfang der Felge verwendbar. Durch das Wegfallen von Felgenhörnern ist auch die Montage erleichtert und kein Tiefbett erforderlich. Des weiteren ist durch die erfindungsgemäßen Maßnahmen die Möglichkeit geschaffen, daß die Abziehkraft bei aufgeblasenem Reifen etwa horizontal und nahe bei den Sitzflächen wirkt, so daß auch bei hoher Beanspruchung ein Lösen der Reifenwülste von der Felge nicht auftritt. Da auch bei Notlauf, also bei defektem Reifen, der Preßsitz weiterhin erhalten bleibt, können sich in diesem Fall die Reifenwülste nicht unbeabsichtigt von der Felge lösen. Im Falle, daß die Sitzflächen am äußeren Umfang der Felge ausgebildet sind, stützt sich der Reifenkörper bei Notlauf im Bereich der Wülste ab, im Falle, daß die Sitzflächen am inneren Umfang der Felge ausgebildet sind, ist ein Abstützen am Felgenkörper leicht möglich.

Als besonders günstig für den erfindungsgemäßen Zweck hat es sich erwiesen, daß die Wulstkerne aus Metallkabeln bestehen, die um die Kernlängsachse verdrillt sind. Derartige Wulstkerne, die aus herkömmlichen Kernmaterial herstellbar sind, sind beim Erstellen des Preßsitzes besonders gut verquetschbar und in der Lage, die auftretenden Kräfte aufzunehmen.

Besonders einfach ist der Aufbau der Felge des Fahrzeugrades dadurch, daß die Sitzflächen, im Querschnitt betrachtet, geradlinig bzw. im wesentlichen geradlinig verlaufen. Die Ausbildung eines Felgenhornes an der Felge ist nicht mehr erforderlich.

Es gibt eine Anzahl von Möglichkeiten, derartige Sitzflächen auszubilden. Gemäß einer ersten erfindungsgemäßen Ausführungsform wird daher vorgeschlagen, daß die Sitzflächen, in Umfangsrichtung der Felge betrachtet, zylindrisch entlang einer Zylindermantelfläche verlaufen. Hiebei trägt diese Maßnahme zu einem besonders einfachen Aufbau und einer sehr leichten Herstellung der Felge bei.

Bei einer weiteren erfindungsgemäßen Ausführungsform die Sitzflächen betreffend, wird darauf geachtet, daß die Zentrierung des Reifens auf der Felge vor dem Aufpressen erleichtert ist. Zu diesem Zweck ist es vorteilhaft, wenn die Sitzflächen in Umfangsrichtung der Felge sich radial nach außen konisch erweiternd entlang von Kegelmantelflächenabschnitten verlaufen.

Diese eben beschriebenen Ausbildungsmöglichkeiten der Sitzflächen können auch miteinander kombiniert werden. Derartige Sitzflächen können dann so ausgeführt sein, daß sie, über den Umfang der Felge betrachtet, abwechselnd zylindrisch und konisch verlaufende Abschnitte aufweisen, wobei die konischen Abschnitte durch ein kontinuierliches Verringern ihrer Neigung in die zylindrischen Abschnitte stufenlos übergehen. Dadurch ist nicht nur das Zentrieren der Reifenwülste auf der Felge erleichtert, sondern es wird eine zusätzliche Sicherung des Reifens gegen ein Verdrehen auf der Felge erreicht.

Eine besonders vorteilhafte Ausgestaltung dieser Ausführungsform besteht darin, daß jede Sitzfläche, über den Felgenumfang betrachtet, zwei konisch und zwei zylindrisch verlaufende Abschnitte aufweist, die jeweils über einen Sektor von etwa 90° des Felgenumfanges verlaufen.

Eine weitere Maßnahme, die darin besteht, daß an der Felge am axial inneren Endbereich jeder Sitzfläche ein Anschlagring vorgesehen ist, erleichtert und vereinfacht das Aufpressen der Reifenwülste auf der Felge. Um das Positionieren des Reifens zum Aufpressen auf die Felge zu vereinfachen, ist vorgesehen, daß am Wulst ein Stützansatz ausgebildet ist, der am Anschlagring der Felge abstützbar ist.

Das Abziehen des auf Sitzflächen am inneren Umfang der Felge aufgepreßten Reifens wird nach einem weiteren Merkmal dadurch erleichtert, daß der Anschlagring an seinem freien Endbereich eine über den Felgenumfang verlaufende Stützleiste zum Untergreifen des am Wulst vorgesehenen Stützansatzes aufweist, wobei der zwischen dem Anschlagring und dem Wulst gebildete Hohlraum mit Druckluft beaufschlagbar ist. Das Beaufschlagen mit Druckluft kann auf einfache Weise dadurch bewerkstelligt werden, daß am Anschlagring eine oder mehrere Durchlaßöffnung(en) vorgesehen ist bzw. sind.

Das Aufpressen sowie das Abziehen des Reifens von einer Felge, bei der die Sitzflächen am inneren Umfang derselben vorgesehen sind, kann dadurch erleichtert werden, daß am Wulst an seinem der Sitzfläche gegenüberliegenden Bereich eine umlaufende Nocke ausgebildet ist. Sind die Sitzflächen am äußeren Umfang der Felge vorgesehen, so ist es zweckmäßig, wenn die Nocke am radial nach außen an jede Sitzfläche anschließenden Bereich des Wulstes ausgebildet ist.

Bei hohen Belastungen des aufgeblasenen Luftreifens ist es im Falle, daß die Sitzflächen am inneren Felgenumfang vorgesehen sind, möglich, daß die Wülste des Reifens am äußeren Randbereich der Sitzflächen nicht mehr dicht anliegen. In diesem Fall soll verhindert werden, daß der Reifeninnendruck im Sitzflächenbereich zur Wirkung kommt. Es wird daher vorgeschlagen, daß an der Felge zumindest am äußeren Randbereich jeder Sitzfläche zumindest eine ringförmig in Felgenumfangsrichtung verlaufende Nut ausgebildet ist, die somit nach dem Stopfbüchsenprinzip ein Abdichten des Reifens bewirkt.

Eine weitere Ausführungsform der Erfindung besteht darin, daß die Felge in Umfangsrichtung zweigeteilt ist, wobei die beiden Felgenteile gegeneinander verdrehbar und in verdrehter Lage feststellbar sind, wobei vorzugsweise die Anschlagringe von den Felgenböden der Felgenhälften gebildet sind. Diese Felge kann sehr schmal ausgeführt werden. Um jedoch sicherzustellen, daß die Seitenwände Seitenkräfte in ausreichendem Ausmaß aufnehmen können, werden die beiden Felgenhälften mit montiertem Reifen gegeneinander geringfügig verdreht, wodurch die Seitenwände entlang einer Hyperboloidfläche vorgespannt sind.

Der Verdrehwinkel zwischen den beiden Felgenhälften kann auf einfache Weise dadurch festgelegt und auch in einem Bereich gewählt werden, wenn die Felgenböden der Felgenhälften eine Anzahl von Paßbohrungen aufweisen, in denen Paßstifte einrastbar sind. Der Verdrehwinkel wird in einem Bereich zwischen 5° und 15° gewählt werden. Der Verdrehwinkel kann daher je nach den gewünschten Anforderungen an das Komfortverhalten bzw. die Seitenstabilität eingestellt werden. Ein größerer Verdrehwinkel bewirkt hiebei eine größere Seitenwandstabilität, ein geringerer Verdrehwinkel wirkt sich günstig auf das Komfortverhalten des Reifens aus.

Sind die Sitzflächen am inneren Umfang der Felge vorgesehen, so verläuft der dem Wulst benachbarte Bereich der Seitenwand nahe der Felge. Um ein Abknicken der Radialkarkasse in diesem Bereich zu verhindern, ist es vorteilhaft, wenn der Reifenkörper in diesem Bereich mit je einer umlaufenden, die Seitenwände verstärkenden Abstütznocke versehen ist.

Um im Bereich des Gürtels das durch ein Verdrehen der beiden Felgenhälften normal zur Umfangsrichtung der Lauffläche auftretende Torsionsmoment zu kompensieren, was vor allem bei einem größeren Verdrehwinkel erforderlich sein könnte, wird weiters vorgeschlagen, daß zumindest eine Lage des mehrlagigen Gürtels außerhalb der Mitte der Lauffläche verläuft.

Eine weitere derartige Maßnahme besteht darin, daß die untereinander parallelen Kordfäden zumindest einer Lage des mehrlagigen Gürtels mit der Umfangsrichtung der Lauffläche einen größeren Winkel einschließen, als jene zumindest einer zweiten Lage.

Bei allen Ausführungsformen, bei denen die Sitzflächen am inneren Umfang der Felge vorgesehen sind, wird weiters erfindungsgemäß vorgeschlagen, daß die äußere Mantelfläche der Felge zumindest teilweise als Stützfläche für die Reifenzenithpartie beim Notlauf des Reifens ausgebildet ist.

Weitere Merkmale, Vorteile und Einzelheiten der Erfindung werden nun anhand der Zeichnung, die mehrere Ausführungsbeispiele des erfindungsgemäßen Fahrzeugrades darstellt, näher beschrieben.

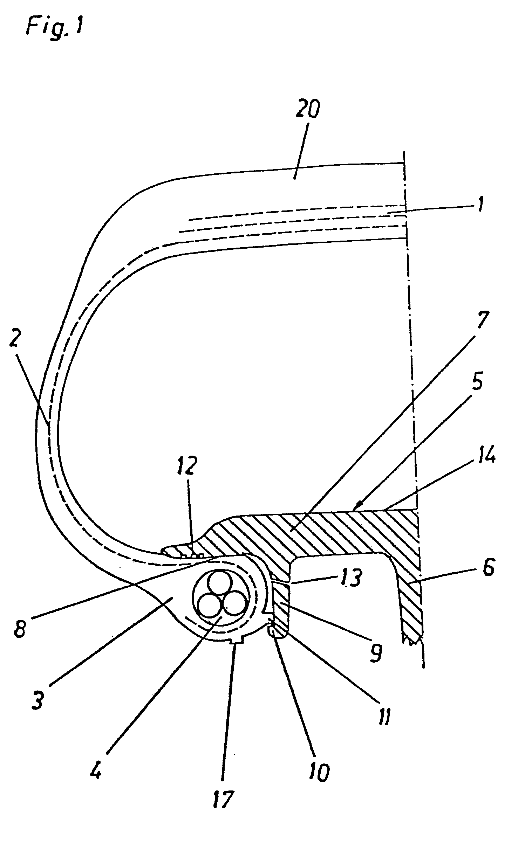

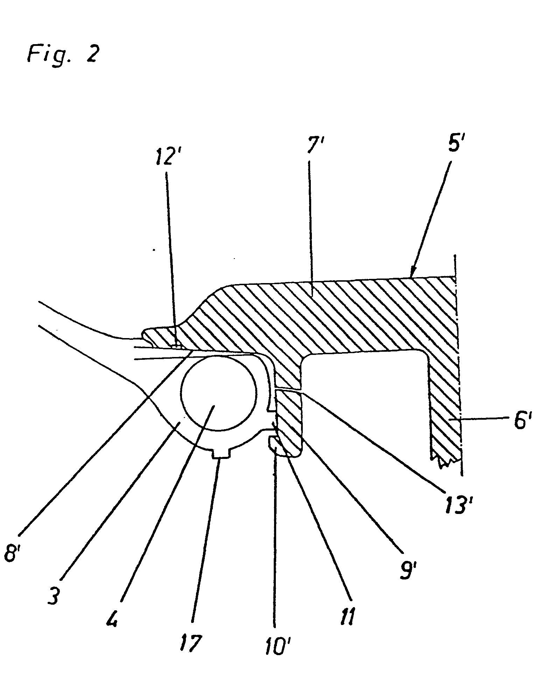

Hiebei zeigen: Fig. 1 einen radialen Teilschnitt durch eine erste Ausführungsform des Fahrzeugrades und die Fig. 2 bis 5 radiale Teilschnitte durch weitere Ausführungsformen. Hiebei sind in den Fig. 1 bis 3 die Wulstkerne in nicht verpreßtem Zustand dargestellt.

Der in den Zeichnungsfiguren dargestellte, für das Fahrzeugrad verwendete Luftreifen weist unterhalb der Lauffläche 20 einen in Umfangsrichtung zugfesten, aus zwei oder mehreren Kordgewebelagen bestehenden Gürtel 1 auf, der die Seitenstabilisierung des Reifenkörpers bewirkt. Der Reifenkörper ist weiters mit einer Radialkarkasse 2 versehen, die in den Wülsten 3 durch Umschlingen von Wulstkernen 4 gehalten ist.

Gemäß Fig. 1 besteht die Felge 5, die einteilig ausgeführt sein kann, aus einem Felgenboden 6 mit zu beiden Seiten im wesentlichen quer abstehenden Seitenteilen 7. Die äußeren Randbereiche der beiden Seitenteile 7 sind als, über den Felgenumfang gesehen, zylindrische Sitzflächen 8 für die Wülste 3 ausgebildet und verlaufen am inneren Umfang der Felge 5. Jede Sitzfläche 8 ist in Richtung zum Felgeninneren von einem über den gesamten Felgenumfang verlaufenden Anschlagring 9 begrenzt. Der innere, freie Endbereich des Anschlagringes 9 bildet eine radial nach außen weisende Stützleiste 10.

Wesentlich ist, daß die Kerne 4 der Wülste 3 als, in Umfangsrichtung betrachtet, druckfeste und als, in radialer Richtung betrachtet, verquetschbare Kerne mit relativ großem Durchmesser ausgebildet sind. Im Ausführungsbeispiel gemäß Fig. 1 ist der Wulstkern 4 ein Kabelkern mit drei miteinander verdrillten Metallkabeln. Der Fahrzeugluftreifen ist nun mittels dieser Wulstkerne 4 an den Sitzflächen 8 der Felge 5 durch Preßsitz gehalten. Bei auf die Felge 5 aufgepreßtem Reifen wird ein am Wulst vorgesehener, in radialer Richtung nach innen weisender Stützansatz 11 von der Stütznase 10 des Anschlagringes 9 untergriffen, sodaß oberhalb der Dichtleiste 11 zwischen dem Wulst 3 und dem Anschlagring 9 ein Hohlraum gebildet ist.

Am radial äußeren Bereich der Sitzfläche 8 ist an der Felge 5 zumindest eine ringförmig umlaufende Nut 12 vorgesehen. Im vorliegenden Ausführungsbeispiel gemäß Fig.1 sind an der Felge 5 pro Sitzfläche 8 drei Nuten 12 ausgebildet. Falls nun der Wulst 3, beispielsweise hervorgerufen durch unterschiedliche Belastungen des aufgeblasenen Luftreifens, am äußeren Bereich der Sitzfläche 8 nicht abdichtend anliegt, ist es vorteilhaft, wenn über die Nut 12 bzw. die Nuten 12 ein kontinuierlicher Druckabbau stattfindet. Auf diese Weise wird somit nach dem Stopfbüchsenprinzip eine Abdichtung des Reifens erzielt.

Solange die Kerne 4 nicht verpreßt sind, ist die Kernlänge, über den Umfang des Reifens gesehen, etwas größer. Zur Montage des Luftreifens ist es leicht möglich, diesen mit noch nicht verquetschten Kernen 4 auf die Felge 5 zu ziehen. Anschließend werden die Wülste 3 mittels einer geeigneten Vorrichtung auf die Sitzflächen 8 der Felge 5 gepreßt, wobei die Kerne 4 verquetscht werden. Diese Vorrichtung kann beispielsweise einen über eine hydraulisch betätigbare Einrichtung beaufschlagbaren Ring aufweisen, dessen Außenfläche entsprechend geformt ist und am Wulst 3 und gegebenenfalls zusätzlich noch auf einer am Wulst 3 ringförmig ausgebildeten und umlaufenden Nocke 17 abstützbar ist.

Das Abziehen des Reifens von der Felge 5 erfolgt mittels eines geeigneten Werkzeuges, mittels welchem beispielsweise die Nocke 17 untergriffen werden kann. Um das Abziehen zu erleichtern, ist es möglich, den Hohlraum zwischen Anschlagring 9 und Wulst 3 mit Druckluft zu füllen. Zu diesem Zweck können eine oder mehrere entsprechende Durchlaßöffnungen 13 im Anschlagring 9 vorgesehen werden, die mit einem Innengewinde für das Endstück eine Hochdruckschlauches versehen werden können.

Wird der Reifenkörper beschädigt, so kann sich die der Lauffläche gegenüberliegende Innenfläche des Reifens an dem eine Stützfläche 14 bildenden Mittelteil der Felge 5 abstützen. Es können jedoch auch zwei Stützflächen vorgesehen werden, die von den Außenbereichen der beiden Seitenteile 7 der Felge 5 gebildet sind.

Das in Fig. 2 dargestellte Ausführungsbeispiel unterscheidet sich nur geringfügig von dem in Fig. 1 dargestellten. Der Reifen entspricht dem in Fig. 1 dargestellten. Weiters weist die in dieser Zeichnungsfigur dargestellte Felge 5' ebenfalls einen Felgenboden 6', Seitenteile 7', Anschlagringe 9', Stützleisten 10', Nuten 12' und Durchlaßöffnungen 13' auf. Der wesentliche Unterschied zwischen den beiden Ausführungsbeispielen besteht darin, daß gemäß Fig. 2 die Sitzflächen 8' sich nach außen konisch erweiternd ausgebildet sind. Diese Maßnahme erleichtert das Zentrieren der Reifenwülste 3 auf der Felge 5'.

Eine weitere Möglichkeit der Ausbildung der Sitzflächen, die nicht gesondert dargestellt ist, besteht darin, daß jede Sitzfläche, über den Felgenumfang gesehen, abschnittsweise und abwechselnd konisch und zylindrisch ausgeführt ist. Hiebei können je zwei konisch und je zwei zylindrisch ausgeführte Sitzflächenabschnitte vorgesehen werden, die jeweils über einen Sektor von 90° verlaufen. Hiebei werden die konischen Sitzflächenabschnitte derart ausgeführt, daß sich ihre Neigung kontinuierlich zu ihren beiden Endbereichen hin verringert, sodaß ein stufenloser Übergang zu den zylindrisch ausgeführten Sitzflächenabschnitten gewährleistet ist. Dadurch ist nicht nur die Zentrierung der Reifenwülste auf der Felge erleichtert, sondern es wird eine zusätzliche Sicherung des Reifens gegen ein Verdrehen auf der Felge erreicht.

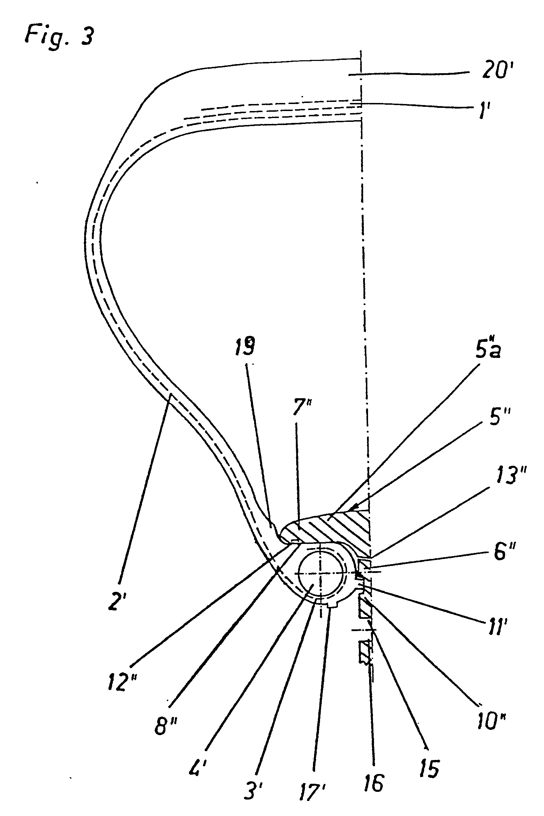

Ein weiteres Ausführungsbeispiel ist in Fig. 3 dargestellt. Bei diesem Ausführungsbeispiel weist der Reifen ebenfalls eine Lauffläche 20', einen Gürtel 1', eine Radialkarkasse 2', Wülste 3' und Wulstkerne 4', Nocken 17' und Stützansätze 11' auf. Die Felge 5" ist sehr schmal ausgeführt und besteht aus zwei Felgenhälften 5"a. Der Sitz der Reifenwülste 3' auf der Felge 5" entspricht jenem in Fig. 1 dargestellten, kann jedoch auch auf die schon beschriebenen weiteren Weisen erfolgen. Ein wesentlicher Unterschied besteht darin, daß kein gesonderter Anschlagring mehr erforderlich ist, sondern der Felgenboden 6" jeder Felgenhälfte 5"a die Funktion des Anschlagringes übernimmt. Um bei einer derartig schmalen Felge 5" sicherzustellen, daß die Seitenwände Seitenkräfte in ausreichendem Ausmaß aufnehmen können, werden die beiden Felgenhälften 5"a bei montiertem Reifen gegeneinander geringfügig verdreht. Dadurch bildet jede Seitenwand zumindest teilweise eine hyperboloidische Fläche. Die derart vorgespannten Seitenwände bieten somit die Möglichkeit, in vermehrtem Ausmaß Seitenkräfte zu übertragen. Um den Verdrehwinkel zwischen den beiden Felgenhälften 5"a zu halten bzw. festzulegen, sind an den Felgenhälften 5"a entsprechende Paßbohrungen 15 vorgesehen, durch welche die beiden Felgenhälften 5"a mittels in der Zeichnungsfigur nur angedeuteter Paßstiften 16 gegeneinander fixierbar sind. Der Verdrehwinkel bewegt sich hiebei in einem Bereich zwischen 5° und 15°. Es können eine Anzahl von Paßbohrungen 15 vorgesehen werden, um den Verdrehwinkel zwischen den beiden Felgenhälften 5"a in einem gewissen Bereich einstellen zu können. Ein größerer Verdrehwinkel bewirkt eine größere Seitenwandstabilität. Ein geringerer Verdrehwinkel wirkt sich günstig auf das Komfortverhalten des Reifens aus.

Auch bei dieser Ausführungsform ist es möglich, in der Felge 5" umlaufende Nuten 12" und entsprechende Durchlaßöffnungen 13" zum Beaufschlagen der Hohlräume zwischen den Felgenböden 6" und den Wülsten 3' mit Druckluft vorzusehen.

Um ein mögliches Abknicken der Radialkarkasse 2' im Bereich der Seitenwände 7" der Felge 5" zu vermeiden, kann die Seitenwand des Reifenkörpers in diesem Bereich entsprechend verstärkt werden, beispielsweise durch Vorsehen einer umlaufenden Abstütznocke 19.

Um im Bereich des Gürtels 1' das durch Verdrehen der beiden Felgenhälften 5"a normal zur Umfangsrichtung der Lauffläche auftretende Torsionsmoment zu kompensieren, was vor allem bei einem größeren Verdrehwinkel erforderlich sein könnte, wird vorgechlagen, daß zumindest eine Lage des in an sich bekannter Weise mehrlagigen Gürtels 1' außerhalb der Mitte der Lauffläche 20' angeordnet wird, also gegenüber der bzw. den weiteren Lagen seitlich verschoben ist. Eine weitere Maßnahme die getroffenwerden könnte, besteht darin, daß die Kordfäden zumindest einer Lage einen größeren Winkel mit der Umfangsrichtung der Lauffläche 20' einschließen als jene zumindest einer weiteren Lage. In diesem Fall sind selbstverständlich sämtliche Kombinationen mit herkömmlichen Winkelungen der Kordfäden der einzelnen Lagen denkbar. Beide Maßnahmen können einzeln für sich oder auch gemeinsam getroffen werden.

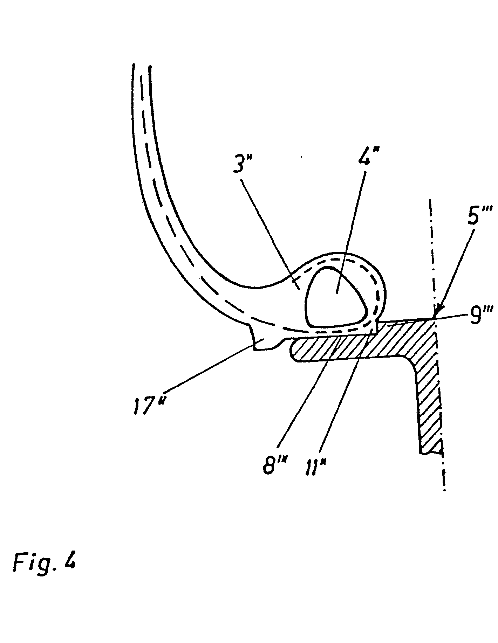

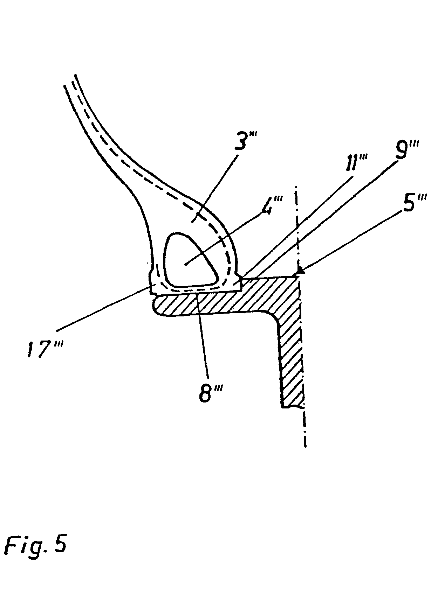

Bei allen bisher beschriebenen Ausführungsformen sind die Sitzflächen für die Reifenwülste am inneren Umfang der Felge vorgesehen. Es ist jedoch auch möglich, die Sitzflächen, auf welchen die Reifenwülste lediglich durch Preßsitz gehalten sind, am äußeren Umfang der Felge anzuordnen. Zwei derartige Ausführungsformen sind in den Fig. 4 und 5 dargestellt. Die Kräfte, denen der verquetschte Wulstkern standzuhalten hat, liegen etwas höher als bei den vorhergehenden Ausführungsbeispielen gemäß den Fig. 1 bis 3.

Bei dem in Fig. 4 dargestellten Ausführungsbeispiel ist der Reifenkörper ähnlich zu dem in Fig. 1 dargestellten, also vergleichsweise flach und breit. Der Reifenwulst 3" ist wiederum mit einem in Umfangsrichtung druckfesten und in radialer Richtung verquetschbaren Kern 4" versehen. Am äußeren Umfang der Felge 5"' sind wiederum Sitzflächen 8"' vorgesehen, die im vorliegenden Ausführungsbeispiel als zylindrische Flächen ausgebildet sind. Die Felge 5"' bildet an ihrem äußeren Umfang einen Anschlagring 9"' für einen am Wulst ausgebildeten Stützansatz 11". Am Wulst 3", an dessen der Sitzfläche 8"' radial nach außen zu anschließenden Bereich ist eine umlaufende Nocke 17" ausgebildet, die, wie schon bei den vorhergehenden Ausführungsbeispielen beschrieben, zum Aufpressen bzw. Abziehen des Reifens vorgesehen ist.

Fig. 5 zeigt ein Ausführungsbeispiel bei dem die Wulstpartie des Reifens ähnlich zu der eines herkömmlichen Reifens gestaltet ist. Die dargestellte Felge 5"' entspricht der des Ausführungsbeispieles gemäß Fig. 4. Wie aus Fig. 5 ersichtlich ist, ist es auch bei einem derartigen Reifen auf einfache Weise möglich, an dem mit einem erfindungsgemäßen Kern 4"' versehenen Wulst 3"' sowohl die Nocke 17"' als auch den Stützansatz 11"' auszubilden. Der Stützansatz 11"' wirkt

9

in der schon beschriebenen Weise mit dem Anschlagring 9''' der Felge 5''' zusammen.

Sebstverständlich ist es auch bei diesen beiden Ausführungsbeispielen möglich, die Sitzflächen an der Felge auf die schon oben beschriebenen Arten auszubilden, insbesondere als sich radial nach außen konisch erweiternde Flächen. Des weiteren ist es bei diesen Ausführungsbeispielen möglich, die Felge, wie beim Ausführungsbeispiel gemäß Fig. 3 beschrieben, zweiteilig auszuführen und die weiteren schon beschriebenen Maßnahmen zu treffen.

Abschließend wird noch einmal darauf hingewiesen, daß eine Vielzahl von Kombinationen der zu den einzelnen Ausführungsbeispielen angegebenen Maßnahmen möglich ist.

Die Erfindung ist auf die dargestellten Ausführungsbeispiele nicht eingeschränkt. Es ist z. B. denkbar, den Wulst so auszubilden, daß zwischen Felge und Wulst kein Hohlraum verbleibt. Auch können die Sitzflächen an den Felgen, in Draufsicht auf die Felge betrachtet, nicht entlang eines Kreises, sondern entlang einer Ellipse verlaufen. Hierbei ist auch eine konische Ausbildung der Sitzflächen oder eine Kombination derselben mit einer parallel zur Achsrichtung der Felge verlaufenden möglich.

**Patentansprüche:**

1. Luftbereiftes Fahrzeugrad mit einer starren Felge (5, 5', 5", 5''') und einem einen Laufstreifen (20, 20'), Seitenwände und eine durch Umschlingen von metallischen Wulstkernen (4, 4', 4", 4''') verankerte Radialkarkasse (2, 2') aufweisenden Gürtelreifen, dessen Wülste (3, 3', 3", 3''') auf Felgensitzflächen (8, 8', 8", (8''') gehalten sind, die entweder am radial inneren Umfang oder am radial äußeren Umfang der Felge (5, 5', 5", 5''') ausgebildet sind, wobei die Wulstkerne (4, 4', 4", 4''') in Umfangsrichtung des Reifens druckfest oder zugfest ausgebildet sind, je nach dem, ob der Reifen an radial innenliegenden oder radial außenliegenden Felgensitzflächen (8, 8', 8", 8''') angeordnet wird, dadurch gekennzeichnet, daß die Wulstkerne (4, 4', 4", 4''') nach dem Aufbringen des Reifens auf die Felge (5, 5' 5", 5''') in radialer Richtung verquetscht werden, derart daß die Reifenwülste (3, 3', 3", 3''') an den Sitzflächen (8, 8', 8", 8''') der Felge (5, 5', 5", 5''') ausschließlich durch Preßsitz gehalten sind.

2. Luftbereiftes Fahrzeugrad nach Anspruch 1, dadurch gekennzeichnet, daß die Wulstkerne (4, 4', 4", 4''') aus Metallkabeln bestehen, die um die Kernlängsachse verdrillt sind.

3. Luftbereiftes Fahrzeugrad nach Anspruch 1, dadurch gekennzeichnet, daß die Sitzflächen (8, 8', 8", 8'''), in Querschnitt betrachtet, geradlinig bzw. im wesentlichen geradlinig verlaufen.

4. Luftbereiftes Fahrzeugrad nach Anspruch 1, dadurch gekennzeichnet, daß die Sitzflächen (8,

10

8", 8'''), in Umfangsrichtung der Felge (5, 5", 5''') betrachtet, zylindrisch entlang einer Zylindermantelfläche verlaufen.

5. Luftbereiftes Fahrzeugrad nach Anspruch 1, dadurch gekennzeichnet, daß die Sitzflächen (8') in Umfangsrichtung der Felge (5') sich radial nach außen konisch erweiternd entlang von Kegelmantelflächenabschnitten verlaufen.

6. Luftbereiftes Fahrzeugrad nach einem der Ansprüche 1 oder 3 bis 5, dadurch gekennzeichnet, daß die Sitzflächen, über den Umfang der Felge betrachtet, abwechselnd zylindrisch oder konisch verlaufende Abschnitte aufweisen, wobei die konischen Abschnitte durch eine kontinuierliche Verringerung ihrer Neigung in die zylindrischen Abschnitte stufenlos übergehen.

7. Luftbereiftes Fahrzeugrad nach Anspruch 6, dadurch gekennzeichnet, daß jede Sitzfläche, über den Felgenumfang betrachtet, zwei konisch und zwei zylindrisch verlaufende Abschnitte aufweist, die jeweils über einen Sektor von 90° des Felgenumfanges verlaufen.

8. Luftbereiftes Fahrzeugrad nach einem der Ansprüche 1 oder 3 bis 7, dadurch gekennzeichnet, daß an der Felge (5, 5', 5", 5''') am axial inneren Endbereich jeder Sitzfläche (8, 8', 8", 8''') ein Anschlagring (9, 9', 9''', 6") vorgesehen ist.

9. Luftbereiftes Fahrzeugrad nach Anspruch 8, dadurch gekennzeichnet, daß am Wulst (3, 3', 3", 3''') ein Stützansatz (11, 11', 11", 11''') ausgebildet ist, der am Anschlagring (9, 9', 9''', 6") der Felge (3, 3', 3", 3''') abstützbar ist.

10. Luftbereiftes Fahrzeugrad nach Anspruch 9, bei dem die Sitzflächen am inneren Umfang der Felge vorgesehen sind, dadurch gekennzeichnet, daß der Anschlagring (9, 9', 6") an seinem freien Endbereich eine über den Felgenumfang verlaufende Stützleiste (10, 10', 10") zum Untergreifen des am Wulst (3, 3') vorgesehenen Stützansatzes (11, 11') aufweist, wobei der zwischen dem Anschlagring (9, 9', 6") und dem Wulst (3, 3') gebildete Hohlraum mit Druckluft beaufschlagbar ist und am Anschlagring (9, 9', 6") zumindest eine Durchlaßöffnung (13, 13', 13") vorgesehen ist.

11. Luftbereiftes Fahrzeugrad nach Anspruch 10, dadurch gekennzeichnet, daß am Wulst (3, 3') an seinem der Sitzfläche (8, 8', 8") gegenüberliegenden Bereich eine umlaufende Nocke (17, 17') ausgebildet ist.

12. Luftbereiftes Fahrzeugrad nach einem der Ansprüche 1 bis 9, bei dem die Sitzflächen am äußeren Umfang der Felge vorgesehen sind, dadurch gekennzeichnet, daß am Wulst (3", 3''') an dessen der Sitzfläche (8''') radial nach außen zu anschließenden Bereich eine umlaufende Nocke (17", 17''') ausgebildet ist.

13. Luftbereiftes Fahrzeugrad nach Anspruch 10 oder 11, dadurch gekennzeichnet, daß an der Felge (5, 5', 5") zumindest am äußeren Randbereich jeder Sitzfläche (8, 8', 8") zumindest eine ringförmig in Felgenumfangsrichtung verlaufende Nut (12, 12', 12") ausgebildet ist.

14. Luftbereiftes Fahrzeugrad nach einem der Ansprüche 1 bis 3, dadurch gekennzeichnet, daß die Felge (5") in Umfangsrichtung zweigeteilt ist, wobei die beiden Felgenteile (5"a) gegeneinander verdrehbar und in verdrehter Lage feststellbar sind, wobei vorzugsweise die Anschlagringe von den Felgenböden (6") der Felgenhälften (5") gebildet sind.

15. Luftbereiftes Fahrzeugrad nach Anspruch 14, dadurch gekennzeichnet, daß zur Festlegung und zur freien Wahl des vorzugsweise 5° bis 15° betragenden Verdrehwinkels zwischen den Felgenhälften (5"a) und den Felgenböden (6") in den Felgenhälften (5"a) eine Anzahl von Paßbohrungen (15) vorgesehen sind, in denen Paßstifte (16) einrastbar sind.

16. Luftbereiftes Fahrzeugrad nach Anspruch 14 oder 15, bei dem die Sitzflächen am inneren Umfang der Felge vorgesehen sind, dadurch gekennzeichnet, daß der Reifen an seiner Innenseite und an seinen der Felge zugeordneten Bereichen mit je einer umlaufenden Abstütznocke (19) versehen ist.

17. Luftbereiftes Fahrzeugrad nach Anspruch 14 oder 15, dadurch gekennzeichnet, daß zumindest eine Lage des mehrlagigen Gürtels (1') des Reifens außerhalb der Mitte der Lauffläche (20') verläuft.

18. Luftbereiftes Fahrzeugrad nach Anspruch 14 oder 15, dadurch gekennzeichnet, daß die untereinander parallelen Kordfäden zumindest einer Lage des mehrlagigen Gürtels (1') mit der Umfangsrichtung der Lauffläche (20') einen größeren Winkel einschließen, als jene zumindest einer zweiten Lage.

19. Luftbereiftes Fahrzeugrad nach einem der Ansprüche 10, 11, 13 oder 16, dadurch gekennzeichnet, daß die äußere Mantelfläche der Felge (5, 5', 5") zumindest teilweise als Stützfläche (14) für die Reifenzenithpartie beim Notlauf des Reifens ausgebildet ist.

## Claims

1. A vehicle wheel fitted with a pneumatic tyre having a rigid rim (5, 5', 5", 5‴) and a radial tyre which comprises a tread (20, 20'), side walls and a radial carcass (2, 2') attached by encircling metallic bead cores (4, 4',4", 4‴) and the beads (3, 3', 3", 3‴) of which are supported on rim seating surfaces (8', 8', 8", 8‴) which are formed either on the radial inner periphery or the radial outer periphery of the rim (5, 5', 5", 5‴), wherein the bead cores (4, 4',4", 4‴) are designed to be pressure-resistant or tensionresistant in the peripheral direction of the tyre depending upon whether the tyre is arranged on the radially inner or radially outer rim seating surfaces (8' 8', 8", 8‴), *characterised in that* when the tyre has been applied to the rim (5, 5', 5", 5‴) the bead cores (4, 4',4", 4‴) are compressed in the radial direction in such a manner that the tyre beads (3, 3', 3", 3‴) are held in contact with the seating surfaces (8' 8', 8", 8‴) of the rim (5, 5', 5", 5‴) solely by a force fit.

2. A vehicle wheel fitted with a pneumatic tyre as claimed in Claim 1, *characterised in that* the bead cores (4, 4',", 4‴) consist of metal cables which are twisted around the longitudinal axis of the core.

3. A vehicle wheel fitted with a pneumatic tyre as claimed in Claim 1, *characterised in that* considered in cross-section the seating surfaces (8, 8', 8", 8‴) are rectilinear or fundamentally rectilinear.

4. A vehicle wheel fitted with a pneumatic tyre as claimed in Claim 1, *characterised in that* considered in the peripheral direction of the rim (5, 5", 5‴) the seating surfaces (8, 8", 8‴) extend cylindrically along a cylinder outer surface.

5. A vehicle wheel fitted with a pneumatic tyre as claimed in Claim 1, *characterised in that* considered in the peripheral direction of the rim (5') the seating surfaces (8') extend radially outwards, widening in conical fashion along cone outer surface sections.

6. A vehicle wheel fitted with a pneumatic tyre as claimed in one of the claims 1 or 3 to 5, *characterised in that* considered over the periphery of the rim the seating surfaces comprise alternately cylindrical or conical sections, where the conical sections continue steplessly into the cylindrical sections by virtue of a continuous reduction of their inclination.

7. A vehicle wheel fitted with a pneumatic tyre as claimed in Claim 6, *characterised in that* considered over the periphery of the rim each seating surface comprises two conical and two cylindrical sections each of which extend over a sector of 90° of the rim periphery.

8. A vehicle wheel fitted with a pneumatic tyre as claimed in one of the claims 1 or 3 to 7, *characterised in that* a stop ring (9, 9', 9‴, 6") is arranged on the rim (5, 5', 5", 5‴) at the axial inner end zone of each seating surface (8, 8', 8", 8‴).

9. A vehicle wheel fitted with a pneumatic tyre as claimed in Claim 8, *characterised in that* a supporting stop (11, 11', 11", 11‴) which can be supported against the stop ring (9, 9', 9", 6") of the rim (3, 3', 3", 3‴) is formed on the bead (3, 3', 3", 3‴).

10. A vehicle wheel fitted with a pneumatic tyre as claimed in Claim 9, wherein the seating surfaces are arranged on the inner periphery of the rim, *characterised in that* at its free end zone the stop ring (9, 9', 6") comprises a supporting strip (10, 10', 10") which extends over the periphery of the rim and which engages under the supporting stop (11, 11') formed on the bead (3, 3'), where the cavity present between the stop ring (9, 9', 6") and the bead (3, 3') can be supplied with compressed air and the stop ring (9, 9', 6") is provided with at least one opening (13, 13', 13").

11. A vehicle wheel fitted with a pneumatic tyre as claimed in Claim 10, *characterised in that* in its zone opposite the seating surface (8, 8', 8") the bead (3, 3') is provided with a peripheral rib (17, 17').

12. A vehicle wheel fitted with a pneumatic tyre as claimed in one of the claims 1 to 9, wherein the seating surfaces are provided on the outer periphery of the rim, *characterised in that* in its zone which is to radially externally adjoin the seating surface (8"'), the bead (3", 3"') is provided with a peripheral rib (17", 17"').

13. A vehicle wheel fitted with a pneumatic tyre as claimed in Claim 10 or 11, *characterised in that* at least at the outer edge zone of each seating surface (8, 8', 8") the rim (5, 5', 5") is provided with at least one groove (12, 12', 12") which extends in the form of a ring in the peripheral direction of the rim.

14. A vehicle wheel fitted with a pneumatic tyre as claimed in one of the claims 1 to 3, *characterised in that* the rim (5") is bisected in the peripheral direction, where the two rim components (5"a) can be rotated in opposite directions and fixed in their rotated position, and where preferably the stop rings are formed by the rim bases (6") of the rim halves (5").

15. A vehicle wheel fitted with a pneumatic tyre as claimed in Claim 14, *characterised in that* in order to fix and freely select the angle of rotation between the rim halves (5"a) and the rim bases (6"), which preferably amounts to 5° to 15°, the rim halves (5"a) are provided with a number of fitting bores (15) into which fitting pins (16) can be engaged.

16. A vehicle wheel fitted with a pneumatic tyre as claimed in Claim 14 or 15 wherein the seating surfaces are arranged on the inner periphery of the rim, *characterised in that* the tyre is provided with a respective peripheral supporting cam (19) on its inside and on its zones assigned to the rim.

17. A vehicle wheel fitted with a pneumatic tyre as claimed in Claim 14 or 15, *characterised in that* at least one layer of the multi-layer belt (1') of the tyre extends outside the centre of the tread (20').

18. A vehicle wheel fitted with a pneumatic tyre as claimed in Claim 14 or 15, *characterised in that* the mutually parallel cord fibres of at least one layer of the multi-layer belt (1') form a larger angle with the peripheral direction of the tread (20') than those of at least one second layer.

19. A vehicle wheel fitted with a pneumatic tyre as claimed in one of the claims 10, 11, 13 or 16, *characterised in that* the outer surface of the rim (5, 5', 5") is designed at least in part as a supporting surface (14) for the zenith section of the tyre during emergency operation of the tyre.

**Revendications**

1. Roue de véhicule à bandage pneumatique, comprenant une jante rigide (5, 5', 5", 5"') et un pneumatique à ceinture qui présente une bande de roulement (20, 20'), des flancs et une carcasse radiale ancrée par enlacement de tringles métalliques (4, 4', 4", 4"'), pneumatique dont les talons (3, 3', 3", 3"') sont retenus sur des surfaces d'assise (8, 8', 8", 8"') ménagées sur la jante, soit sur le pourtour radialement interne, soit sur le pourtour radialement externe de cette jante (5, 5', 5", 5"'), les tringles (4, 4', 4", 4"') étant réalisées résistantes à la pression ou à la traction dans le sens périphérique du pneumatique, selon que ce pneumatique est disposé sur des surfaces d'assise (8, 8', 8", 8"') occupant des positions radialement internes ou radialement externes sur la jante, caractérisée par le fait que les tringles (4, 4', 4", 4"') sont écrasées dans le sens radial, après la mise en place du pneumatique sur la jante (5, 5', 5", 5"'), de façon telle que les talons (3, 3', 3", 3"') du pneumatique soient exclusivement retenus par une assise par compression sur les surfaces d'assise (8, 8', 8", 8"') de la jante (5, 5', 5", 5"').

2. Roue de véhicule à bandage pneumatique selon la revendication 1, caractérisée par le fait que les tringles (4, 4', 4", 4"') sont des câbles métalliques torsadés autour de l'axe longitudinal desdites tringles.

3. Roue de véhicule à bandage pneumatique selon la revendication 1, caractérisée par le fait que, observées en coupe transversale, les surfaces d'assise (8, 8', 8", 8"') sont droites ou pratiquement droites.

4. Roue de véhicule à bandage pneumatique selon la revendication 1, caractérisée par le fait que, observées dans le sens périphérique de la jante (5, 5", 5"'), les surfaces d'assise (8, 8", 8"') s'étendent selon un cylindre le long de la surface de l'enveloppe d'un cylindre.

5. Roue de véhicule à bandage pneumatique selon la revendication 1, caractérisée le fait que les surface d'assise (8') s'étendent dans le sens périphérique de la jante (5'), avec évasement conique vers l'extérieur dans le sens radial, le long de tronçons superficiels de l'enveloppe d'un cône.

6. Roue de véhicule à bandage pneumatique selon l'une des revendications 1 ou 3 à 5, caractérisée par le fait que, observées sur le pourtour de la jante, les surfaces d'assise présentent alternativement des tronçons s'étendant en cylindre ou en cône, les tronçons coniques fusionnant sans transition dans les tronçons cylindriques, par une réduction continue de leur inclinaison.

7. Roue de véhicule à bandage pneumatique selon la revendication 6, caractérisée par le fait que, observée sur le pourtour de la jante, chaque surface d'assise comprend deux tronçons s'étendant en cône et deux tronçons s'étendant en cylindre, qui s'étendent à chaque fois sur un secteur de 90° du pourtour de la jante.

8. Roue de véhicule à bandage pneumatique selon l'une des revendications 1 ou 3 à 7, caractérisée par le fait qu'un anneau de butée (9, 9', 9''', 6") est prévu sur la jante (5, 5', 5", 5'''), dans la zone extrême axialement interne de chaque surface d'assise (8, 8', 8", 8''').

9. Roue de véhicule à bandage pneumatique selon la revendication 8, caractérisée par le fait qu'un décrochement d'appui (11, 11', 11", 11'''), ménagé sur le talon (3, 3', 3", 3'''), peut prendre appui sur l'anneau de butée (9, 9', 9''', 6") de la jante (3, 3', 3", 3''').

10. Roue de véhicule à bandage pneumatique selon la revendication 9, dans laquelle les surfaces d'assise sont prévues sur le pourtour interne de la jante, caractérisée par le fait que l'anneau de butée (9, 9', 6") présente, dans sa région extrême libre, une moulure de soutien (10, 10', 10") s'étendant sur le pourtour de la jante, pour emprisonner par-dessous le décrochement d'appui (11, 11') prévu sur le talon (3, 3'), la cavité formée entre l'anneau de butée (9, 9', 6") et le talon (3, 3') pouvant être sollicitée par de l'air comprimé, et au moins un orifice de passage (13, 13', 13") étant prévu sur l'anneau de butée (9, 9', 6").

11. Roue de véhicule à bandage pneumatique selon la revendication 10, caractérisée par le fait qu'une protubérance circonférentielle (17, 17') est ménagée sur le talon (3, 3'), dans sa région opposée à la surface d'assise (8, 8', 8").

12. Roue de véhicule à bandage pneumatique selon l'une des revendications 1 à 9, dans laquelle les surfaces d'assise sont prévues sur le pourtour externe de la jante, caractérisée par le fait qu'une protubérance circonférentielle (17", 17''') est ménagée sur le talon (3", 3'''), dans la région de celui-ci se rattachant à la surface d'assise (8'''), radialement vers l'extérieur.

13. Roue de véhicule à bandage pneumatique selon la revendication 10 ou 11, caractérisée par le fait qu'au moins une rainure (12, 12', 12") s'étendant annulairement dans le sens périphérique de la jante est ménagée sur cette jante (5, 5', 5"), au moins dans la zone marginale extérieure de chaque surface d'assise (8, 8', 8").

14. Roue de véhicule à bandage pneumatique selon l'une des revendications 1 à 3, caractérisée par le fait que la jante (5") est scindée en deux dans le sens périphérique, les deux parties (5"a) de cette jante pouvant tourner l'une par rapport à l'autre et pouvant être consignées à demeure dans la position prise par rotation, les anneaux de butée étant formés, de préférence, par les fonds (6") des moitiés (5") de la jante.

15. Roue de véhicule à bandage pneumatique selon la revendication 14, caractérisée par le fait qu'un certain nombre de trous d'adaptation (15), dans lesquels des chevilles d'adaptation (16) sont emboîtables, sont prévus dans les moitiés (5"a) de la jante, en vue de la définition et du libre choix de l'angle de rotation entre les moitiés (5"a) de la jante et les fonds (6") de cette jante, mesurant de préférence entre 5° et 15°.

16. Roue de véhicule à bandage pneumatique selon la revendication 14 ou 15, dans laquelle les surfaces d'assise sont prévues sur le pourtour interne de la jante, caractérisée par le fait que le pneumatique est pourvu d'une protubérance circonférentielle d'appui (19), respectivement à sa face interne et dans ses régions associées à la jante.

17. Roue de véhicule à bandage pneumatique selon la revendication 14 ou 15, caractérisée par le fait qu'au moins une couche de la ceinture (1') à plusieurs couches du pneumatique s'étend en dehors du centre de la surface de roulement (20').

18. Roue de véhicule à bandage pneumatique selon la revendication 14 ou 15, caractérisée par le fait que les fils de la nappe câblée d'au moins une couche de la ceinture (1') à plusieurs couches, s'étendant parallèlement les uns aux autres, décrivent avec le sens périphérique de la surface de roulement (20') un plus grand angle que ceux d'au moins une seconde couche.

19. Roue de véhicule à bandage pneumatique selon l'une des revendications 10, 11, 13 ou 16, caractérisée par le fait que la surface externe de l'enveloppe de la jante (5, 5', 5") est réalisée au moins partiellement sous la forme d'une surface de soutien (14), pour la partie zénithale du pneumatique lors du roulement d'urgence de ce pneumatique.

**Fig.1**

Fig. 2

Fig. 3

Fig. 4

Fig. 5